# EUROPEAN PATENT SPECIFICATION

(11) **EP 2 159 023 B1**
(45) Date of publication and mention of the grant of the patent: **15.07.2015**
(21) Application number: 09169191.5
(22) Date of filing: 01.09.2009
(51) Int. Cl.: B27M 1/08, B23Q 7/00, B23Q 7/04

(54) **Machining centre for machining components made of wood or the like having an elongated shape, in particular components for frames**
Bearbeitungszentrum zur Verarbeitung von Komponenten aus Holz oder dergleichen mit einer länglichen Form, insbesondere Komponenten für Rahmen
Centre d'usinage pour usiner des composants fabriqués en bois ou similaire dotés d'une forme allongée, en particulier des composants pour cadres

(30) Priority: 02.09.2008 IT BO20080535
(43) Date of publication of application: 03.03.2010
(73) Proprietor: BIESSE S.p.A., 61100 Pesaro (IT)
(72) Inventor: Bernardi, Paolo, 47841 Cattolica (IT)
(74) Representative: Bergadano, Mirko

(56) References cited:
- EP-A- 1 247 611
- EP-A- 1 810 803
- DE-A1- 19 846 819
- IT-A1- BO20 070 356

## Description

The present invention relates to a machining centre for machining components made of wood or the like having an elongated shape, in particular components for frames.

In the field of manufacturing components for frames, a prior art machining centre comprises a forming machine in turn comprising a first gripping device, which extends in a first given direction, and is provided with a plurality of clamping vices for locking at least one component parallel to said first direction, a second gripping device, which faces the first gripping device, extends in the first direction, and is provided with a plurality of clamping vices for locking at least one component parallel to said first direction, and two working heads mobile in the first direction for longitudinally profiling the components locked in the first and second gripping device.

The two gripping devices are also mobile with respect to one another in a second direction transversal to the first direction to allow each component to be transferred from the first to the second gripping device.

The machining centre also comprises a unit for removing the components from the second gripping device. The sampling unit normally comprises a conveyor belt, which extends in the first direction, and cooperates with a pushing member mobile inside the clamping vices in said first direction so as to release the newly-machined component from the clamping vices and move it onto the conveyor belt.

The prior art machining centres of the type described above have some drawbacks mainly deriving from the fact that the conveyor belt of the sampling unit is unable to guarantee correct positioning of the components, especially in case of shaped components, and thus prevents performance of precision machining processes after profiling.

In particular, when the processes to be performed after profiling involve the gluing of additional elements such as, for instance, coupling pins onto the components, the glue applied to the components could drip onto the conveyor belt and thus result in the need for frequent servicing and cleaning of said conveyor belt by machine maintenance personnel.

Document EP-1992464-A discloses a machining centre for machining elongated-shaped components made of wood or the like comprising an overhead travelling crane provided with a vertical upright and with a horizontal cross member, which is fixed to the free end of the upright, and extends in a first direction; a first gripping device provided with at least a first clamping vice for locking at least a component parallel to a horizontal second direction transversal to the first direction; a second gripping device facing the first gripping device and provided with at least a second clamping vice for locking at least a component parallel to the second direction; and a working head mounted on the cross member.

The cross member is mobile in the second direction to allow the working head to longitudinally profiling the components locked in the first and/or second gripping device.

The machining centre further comprises a sampling unit mounted on the cross member for extracting the components from the first and/or second gripping device.

It is an object of the present invention to provide a machining centre for machining components made of wood or the like having an elongated shape, in particular components for frames, that overcomes the drawbacks described above and is simple and economical to produce.

According to the present invention there is provided a machining centre for machining components made of wood or the like having an elongated shape, in particular components for frames, as claimed in claim 1.

The present invention will now be described with reference to the accompanying drawings, illustrating a non-limiting embodiment thereof, in which:
figure 1 is a schematic perspective view of a preferred embodiment of the machining centre according to the present invention; and

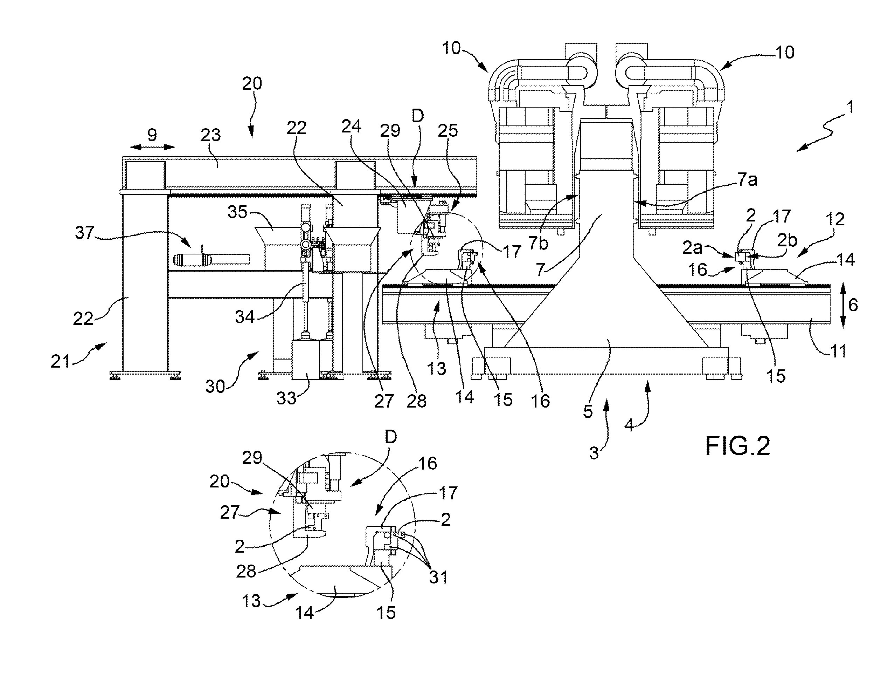

figure 2 is a schematic side view, with parts enlarged for the sake of clarity, of the machining centre of figure 1.

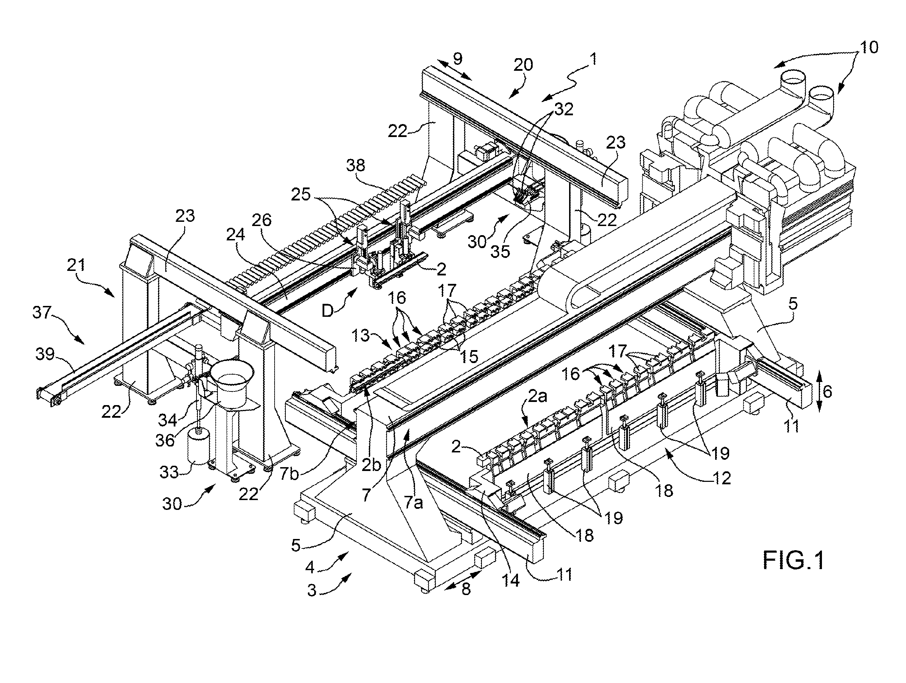

With reference to figure 1, designated as a whole by number 1 is a machining centre for machining components 2 made of wood for frames having an elongated shape.

The machining centre 1 comprises a forming machine 3 in turn comprising a gantry frame 4 with two upright members 5 parallel to one another and to a substantially vertical direction 6 and a cross member 7, which is fixed to the free ends of the upright members 5, extends in a substantially horizontal direction 8 transversal to the direction 6, and is limited laterally in a horizontal direction 9 orthogonal to the directions 6 and 8 by two substantially flat faces 7a, 7b, on each of which is mounted a relative working head 10.

The head 10 is connected in a conventional manner to the cross member 7 so as to perform, along the cross member 7 and driven by a conventional drive device that is not illustrated, rectilinear movements in the direction 8, and is provided with at least one electric spindle and a drilling unit (known and not illustrated) which are mounted in a conventional manner on the head 10 so as to perform, with respect to the head 10 and driven by a conventional drive device that is not illustrated, rectilinear movements in the direction 6.

With regard to the above description it should be noted that the working heads 10 can be moved in the direction 8 either independently of one another, or synchronously with one another.

The forming machine 3 also comprises two longitudinal guiding members 11, which extend in the direction 9, are mounted inside the upright members 5, and support two gripping and transfer devices 12, 13 that face one another.

Each device 12, 13 comprises a supporting bar 14, which is slidingly coupled to the longitudinal members 11 so as to perform, along the longitudinal members 11 and driven by a conventional drive device that is not illustrated, rectilinear movements in the direction 9, and is upperly limited by a substantially flat and horizontal surface to which a plurality of lower jaws 15 of relative clamping vices 16 are attached, which face the vices 16 of the other device 12, 13 and also comprise respective upper jaws 17 that are substantially L-shaped.

The jaws 17 of each device 12, 13 are divided into a plurality of mutually independent sets of jaws 17 (in the specific case two sets of jaws 17), and the jaws 17 of each set of jaws 17 protrude upwards from a relative slide 18 connected in a conventional manner to the bar 14 so as to perform, with respect to the bar 14 and driven by a plurality of actuating cylinders 19 (in the specific case three actuating cylinders 19) connected to the bar 14, rectilinear movements in the direction 6 and move the relative jaws 17 between a locked position and a released position of at least one component 2.

In use, each component 2 is loaded, by hand or automatically, onto the gripping and transfer device 12 and is longitudinally profiled along a face 2a thereof protruding outwards from the vices 16 of the device 12 by the working head 10 mounted on the side 7a of the cross member 7.

When the face 2a has been profiled, the component 2 is transferred from the vices 16 of the device 12 to the vices 16 of the device 13, and is then longitudinally profiled along a face 2b thereof opposite the face 2a and protruding outwards from the vices 16 of the device 13 by the working head 10 mounted on the side 7b of the cross member 7.

When the faces 2a, 2b have been profiled and, in the specific case, after drilling the head ends of the component 2 in the direction 8, the components 2 are removed from the device 13 by means of a sampling unit 20, which is aligned with the forming machine 3 in the direction 9, and is provided with a supporting frame 21 comprising two pairs of vertical rods 22 parallel to one another and to the direction 6. Each pair of vertical rods 22 supports a longitudinal guiding member 23 connected to the free ends of the relative vertical rods 22 parallel to the direction 9.

The unit 20 also comprises a cross element 24, which extends between the longitudinal members 23 in the direction 8, is connected in a conventional manner to the longitudinal members 23 so as to perform, along the longitudinal members 23 and driven by a conventional drive device that is not illustrated, rectilinear movements in the direction 9, and supports a grip and transfer device D comprising a plurality of gripping and transferring members 25, in the specific case two gripping and transferring members 25, mounted on a side of the cross element 24.

Each member 25 comprises a slide 26, which is connected in a conventional manner to the cross element 24 so as to perform, along the cross element 24 and driven by a conventional drive device that is not illustrated, rectilinear movements in the direction 8, and supports a clamping vice 27 comprising a lower jaw 28 connected in a conventional manner to the slide 26 so as to perform, with respect to said slide 26, rectilinear movements in the direction 6 and an upper jaw 29 connected in a conventional manner to the jaw 28 so as to perform, with respect to said jaw 28, rectilinear movements in the direction 6 between a locked position and a released position of at least one component 2.

The machining centre 1 also comprises, in the specific case, two conventional inserting units 30 arranged on opposite sides of the frame 21 in the direction 8 for inserting coupling pins (not illustrated) inside relative holes 31 made by the heads 10 in the head ends of the components 2 parallel to the direction 8.

Each unit 30 comprises a gumming nozzle 32, which is connected to a glue containing tank 33 by means of a pumping device 34, and is suitable to deliver glue inside the relative holes 31, and an insertion device 35, which is connected to a hopper 36 that contains pins, and is suitable to insert a pin (not illustrated) inside each relative hole 31.

Lastly, the machining centre 1 comprises a conveyor device 37, which extends in the direction 8, and in turn comprises a roller conveyor 38 suitable to receive the components 2 from the sampling unit 20 and a conveyor belt 39 arranged in series with the conveyor 38.

As regards the above description it should be noted that the jaws 28, 29 of the vices 27 present a width, measured parallel to the direction 8, that is approximating by defect the distance between the jaws 15, 17 of two adjacent vices 16, and also the distance between two adjacent rollers of the conveyor 38.

Thus, in use, combining the movements of the cross element 24 in the direction 9 with the movements of the slides 26 in the direction 8 and with the movements of the vices 27 in the direction 6, the jaws 28, 29 of the vices 27 are engaged between the jaws 15, 17 of the vices 16 of the device 13 enabling the unit 20 to remove the component 2 from the forming machine 3, feed it in sequence to the two units 30, and unload it onto the conveyor 38.

From the above description it is clear that from when it is inserted into the device 12 until being released onto the conveyor 38, the component 2 is always kept inside the vices 16 and/or 27 and at a given distance from the floor, thus preventing the need for any intermediate repositioning of said component 2.

According to some alternative embodiments that are not illustrated:
the unit 20 is provided with two grip and transfer devices D mounted on the same side or on opposite sides of the cross element 24;
the units 30 are eliminated and the unit 20 transfers the components 2 directly from the device 13 onto the conveyor 38;
the unit 20 cooperates with at least one device for marking and/or labelling the components 2, for example using RFID tags;
the unit 20 cooperates with other insertion units, used in addition to or instead of the units 30, suitable to insert the ironmongery elements for frames, for example handles, hinges, pintles, inside relative seats made by the heads 10 in the components 2; and
the cross member 7 is mobile in the direction 9 and the devices 12, 13 are stationary in said direction 9.

## Claims

1. Machining centre for machining elongated-shaped components (2) made of wood or the like, in particular components (2) for frames, the machining centre comprising a forming machine (3) and at least a sampling unit (20) of the components (2) from the forming machine (3); the forming machine (3) comprising, in turn, a gantry frame (4) provided with two upright members (5) parallel to one another and to a substantially vertical first direction (6) and with a cross member (7), which is fixed to the free ends of the upright members (5), and extends in a substantially horizontal second direction (8) transversal to the first direction 6); a first gripping device (12) provided with at least a first clamping vice (16) for locking at least a component (2) parallelly to the second direction (8), a second gripping device (13) facing the first gripping device (12) and provided with at least a second clamping vice (16) for locking at least a component (2) parallelly to the second direction (8), and at least a working head (10) mobile along the cross member (7) in the second direction (8) for longitudinally profiling the components (2) locked in the first and/or second gripping device (12, 13); the sampling unit (20) comprising at least a grip and transfer device (D) provided with at least a third clamping vice (27) mobile in a third direction (9) substantially orthogonal to said first and second directions (6, 8) for extracting at least a component (2) from the first and/or second gripping device (12, 13).

2. Machining centre according to claim 1, wherein the third clamping vice (27) is further mobile in the first direction (6) and/or in the second direction (8).

3. Machining centre according to claim 1 or 2, wherein the sampling unit (20) comprises a cross element (24), which extends in the second direction (8) and is mobile in the third direction (9); the grip and transfer device (D) being supported by the cross element (24).

4. Machining centre according to claim 3 and further comprising at least two grip and transfer devices (D) mounted on the opposite sides of said cross element (24).

5. Machining centre according to one of the preceding claims, wherein each said first and second gripping device (12, 13) comprises a plurality of first and, respectively, second clamping vices (16); the third clamping vice (27) being shaped in order to be inserted between two said first or second clamping vices (16) adjacent to each other in said first direction (6) and/or in said third direction (9).

6. Machining centre according to one of the preceding claims and further comprising a conveyor (37) defining a supporting plane apt to collect the components (2) from the sampling unit (20).

7. Machining centre according to one of the preceding claims, wherein the working head (10) comprises at least a drilling tool for drilling the component (2) in said second direction (8); the machining centre further comprising at least a first inserting unit (30) for inserting at least a coupling pin into the component (2) kept inside the third clamping vice (27).

8. Machining centre according to one of the preceding claims, wherein the working head (10) comprises at least a milling tool for forming at least a seat in the component (2); the machining centre further comprising at least a second inserting unit (30) for inserting at least an ironmongery element for frames inside said seat while the component (2) is kept inside the third clamping vice (27).

9. Machining centre according to one of the preceding claims and further comprising a labelling and/or marking device of the component (2) kept inside the third clamping vice (27).

10. Machining centre according to one of the preceding claims, wherein the sampling unit (20) comprises two vertical rods (22), a driving device (23) mounted on the vertical rods (22) parallelly to the third direction (9), and a horizontal cross element (24) mounted on the driving device (23) for moving in the third direction (9); the third clamping vice (27) being mobile along the cross element (24) in the second direction (8).

11. Machining centre according to one of the preceding claims, wherein the forming machine comprises two said working heads (10) for machining at the same time two components (2) kept by the first and by the second gripping device (12, 13).

## Patentansprüche

1. Bearbeitungszentrum zum Bearbeiten langer Komponenten (2) aus Holz oder dergleichen, insbesondere Komponenten (2) für Rahmen, wobei das Bearbeitungszentrum eine Formmaschine (3) umfasst sowie wenigstens eine Aufnahmeeinheit (20) für die Komponenten (2) aus der Formmaschine (3); die Formmaschine (3) umfasst ihrerseits eine Stuhlung (4), versehen mit zwei aufrecht stehenden Ständern (5), die parallel zueinander sowie zu einer im Wesentlichen vertikalen ersten Richtung (6) verlaufen, und mit einem Querelement (7), das an den freien Enden der Ständer (5) fixiert ist und sich in einer im Wesentlichen horizontalen zweiten Richtung (8) quer zur ersten Richtung (6) erstreckt; einen ersten Greifer (12), versehen mit wenigstens einer ersten Spanneinrichtung (16) zum Verriegeln wenigstens einer Komponente (2) parallel zur zweiten Richtung (8), einen zweiten Greifer (13), der dem ersten Greifer (12) zugewandt und mit wenigstens einer zweiten Spanneinrichtung (16) zum Verriegeln wenigstens einer Komponente (2) parallel zur zweiten Richtung (8) versehen ist; und wenigstens einen Bearbeitungskopf (10), der entlang des Querelementes (7) in der zweiten Richtung (8) beweglich ist, um die Komponenten (2), die im ersten und/oder zweiten Greifer (12, 13) verriegelt sind, in Längsrichtung zu profilieren; wobei die Aufnahmeeinheit (20) wenigstens eine Greif- und Transfereinheit (D) umfasst, versehen mit wenigstens einer dritten Spanneinrichtung (27), die beweglich ist in einer dritten Richtung (9) im Wesentlichen senkrecht zu der ersten und der zweiten Richtung (6, 8) zum Entnehmen wenigstens einer Komponente (2) vom ersten und/oder zweiten Greifer (12, 13).

2. Bearbeitungszentrum nach Anspruch 1, wobei die dritte Spanneinrichtung (27) in der ersten Richtung (6) und/oder in der zweiten Richtung (8) beweglich ist.

3. Bearbeitungszentrum nach Anspruch 1 oder 2, wobei die Aufnahmeeinheit (20) ein Querelement (24) umfasst, das sich in der zweiten Richtung (8) erstreckt und in der dritten Richtung (9) beweglich ist, wobei die Greif- und Transfereinheit (D) vom Querelement (24) getragen ist.

4. Bearbeitungszentrum nach Anspruch 3, weiterhin umfassend wenigstens zwei Greif- und Transfereinheiten (D) angeordnet auf einander gegenüberliegenden Seiten des Querelementes (24).

5. Bearbeitungszentrum nach einem der vorausgegangenen Ansprüche, wobei der erste und der zweite Greifer (12, 13) eine Mehrzahl erster beziehungsweise zweiter Spanneinrichtungen (16) aufweisen, wobei die dritte Spanneinrichtung (27) derart gestaltet ist, dass sie zwischen der ersten und der zweiten Spanneinrichtung (16) eingelassen wird, in der ersten Richtung (6) und/oder in der dritten Richtung (9) nahe beieinander.

6. Bearbeitungszentrum nach einem der vorausgegangenen Ansprüche, weiterhin umfassend einen Förderer (37), der eine Tragebene zum Aufnehmen der Komponenten (2) aus der Aufnahmeeinheit (20) bildet.

7. Bearbeitungszentrum nach einem der vorausgegangenen Ansprüche, wobei der Bearbeitungskopf (10) wenigstens ein Bohrwerkzeug zum Anbohren der Komponente (2) in der zweiten Richtung (8) umfasst, wobei das Bearbeitungszentrum weiterhin wenigstens eine erste Einführeinheit (30) zum Einführen wenigstens eines Kupplungsstiftes in die Komponente (2) umfasst, die innerhalb der dritten Spanneinrichtung gehalten ist.

8. Bearbeitungszentrum nach einem der vorausgegangenen Ansprüche, wobei der Bearbeitungskopf (10) wenigstens ein Fräswerkzeug zum Bilden wenigstens eines Sitzes in der Komponente (2) aufweist; wobei das Bearbeitungszentrum weiterhin wenigstens eine zweite Einführeinheit (30) zum Einführen wenigstens eines Eisenelementes für Rahmen innerhalb des Sitzes umfasst, während die Komponente (2) innerhalb der dritten Spanneinrichtung (27) gehalten ist.

9. Bearbeitungszentrum nach einem der vorausgegangenen Ansprüche, weiterhin umfassend eine Etikettier- und/oder Markiereinrichtung für die Komponente (2), die innerhalb der dritten Spanneinrichtung (27) gehalten ist.

10. Bearbeitungszentrum nach einem der vorausgegangenen Ansprüche, wobei die Aufnahmeeinheit (20) zwei vertikale Stäbe (22) umfasst, einen Antrieb (23), der auf den vertikalen Stäben (22) parallel zur dritten Richtung (9) angeordnet ist, und ein horizontales Querelement (24), das auf dem Antrieb (23) zur Bewegung in der dritten Richtung (9) sitzt, wobei die dritte Spanneinrichtung (27) entlang dem Querelement (24) in der zweiten Richtung (8) beweglich ist.

11. Bearbeitungszentrum nach einem der vorausgegangenen Ansprüche, wobei die Formmaschine zwei Bearbeitungsköpfe (10) umfasst, um gleichzeitig zwei Komponenten (2) zu bearbeiten, die vom ersten und zweiten Greifer (12, 13) gehalten sind.

## Revendications

1. Centre d'usinage pour l'usinage de composants de forme allongée (2) composés de bois ou similaire, en particulier de composants (2) pour cadres, le centre d'usinage comprenant une machine à former (3) et au moins une unité d'échantillonnage (20) des éléments (2) provenant de la machine à former (3) ; la machine à former (3) comprenant, à son tour, une structure de portique (4) dotée de deux éléments droits (5) parallèles l'un à l'autre et à une première direction (6) sensiblement verticale et d'un élément transversal (7), qui est fixé aux extrémités libres des éléments droits (5), et s'étend dans une deuxième direction sensiblement horizontale (8) transversale à la première direction (6) ; un premier dispositif de préhension (12) doté d'au moins un premier étau de serrage (16) pour bloquer au moins un composant (2) parallèlement à la deuxième direction (8), un second dispositif de préhension (13) faisant face au premier dispositif de préhension (12) et doté d'au moins un deuxième étau de serrage (16) pour bloquer au moins un composant (2) parallèlement à la deuxième direction (8) ; et au moins une tête de travail (10) mobile le long de l'élément transversal (7) dans la deuxième direction (8) pour le profilage longitudinal des composants (2) bloqués dans les premier et/ou second dispositifs de préhension (12, 13) ; l'unité d'échantillonnage (20) comprenant au moins un dispositif de prise et de transfert (D) doté d'au moins un troisième étau de serrage (27) mobile dans une troisième direction (9) sensiblement orthogonale auxdites première et deuxième directions (6, 8) pour extraire au moins un composant (2) desdits premier et/ou second dispositifs de préhension (12, 13).

2. Centre d'usinage selon la revendication 1, dans lequel le troisième étau de serrage (27) est en outre mobile dans la première direction (6) et/ou dans la deuxième direction (8).

3. Centre d'usinage selon la revendication 1 ou 2, dans lequel l'unité d'échantillonnage (20) comprend un élément transversal (24), qui s'étend dans la deuxième direction (8) et est mobile dans la troisième direction (9) ; le dispositif de prise et de transfert (D) étant supporté par l'élément transversal (24).

4. Centre d'usinage selon la revendication 3 et comprenant en outre au moins deux dispositifs de prise et de transfert (D) montés sur les côtés opposés dudit élément transversal (24).

5. Centre d'usinage selon l'une quelconque des revendications précédentes, dans lequel chacun desdits premier et second dispositifs de préhension (12, 13) comprend une pluralité de premiers et, respectivement, deuxièmes étaux de serrage (16) ; le troisième étau de serrage (27) étant formé pour être inséré entre lesdits premiers ou deuxièmes étaux de serrage (16) adjacents l'un à l'autre dans ladite première direction (6) et/ou ladite troisième direction (9).

6. Centre d'usinage selon l'une quelconque des revendications précédentes et comprenant en outre un transporteur (37) définissant un plan de support apte à collecter les composants (2) provenant de l'unité d'échantillonnage (20).

7. Centre d'usinage selon l'une quelconque des revendications précédentes, dans lequel la tête de travail (10) comprend au moins un outil de forage pour forer le composant (2) dans ladite deuxième direction (8) ; le centre d'usinage comprenant en outre au moins une première unité d'insertion (30) pour insérer au moins une tige d'accouplement dans l'élément (2) maintenu à l'intérieur du troisième étau de serrage (27).

8. Centre d'usinage selon l'une quelconque des revendications précédentes, dans lequel la tête de travail (10) comprend au moins un outil de fraisage pour former au moins un support dans l'élément (2) ; le centre d'usinage comprenant en outre au moins une seconde unité d'insertion (30) pour insérer au moins un élément de quincaillerie pour cadres à l'intérieur dudit support alors que le composant (2) est maintenu à l'intérieur du troisième étau de serrage (27).

9. Centre d'usinage selon l'une quelconque des revendications précédentes et comprenant en outre un dispositif d'étiquetage et/ou de marquage du composant (2) maintenu à l'intérieur du troisième étau de serrage (27).

10. Centre d'usinage selon l'une quelconque des revendications précédentes, dans lequel l'unité d'échantillonnage (20) comprend deux tiges verticales (22), un dispositif d'entraînement (23) monté sur les tiges verticales (22) parallèlement à la troisième direction (9), et un élément transversal horizontal (24) monté sur le dispositif d'entraînement (23) pour se déplacer dans la troisième direction (9) ; le troisième étau de serrage (27) étant mobile le long de l'élément transversal (24) dans la deuxième direction (8).

11. Centre d'usinage selon l'une quelconque des revendications précédentes, dans lequel la machine à former comprend deux desdites têtes de travail (10) pour usiner en même temps deux composants (2) maintenus par les premier et second dispositifs de préhension (12, 13).
